# EUROPEAN PATENT APPLICATION

(11) **EP 4 563 375 A1**
(43) Date of publication of application: **04.06.2025**
(21) Application number: 23845658.6
(22) Date of filing: 27.07.2023
(51) Int. Cl.: B60H 1/32, B60H 1/00, B60H 1/04, B60K 11/04, B60L 58/26, B60L 58/27, B60H 3/02

(54) **HEAT PUMP AIR-CONDITIONING SYSTEM, AND VEHICLE**

(30) Priority: 27.07.2022 CN 202210893741
(71) Applicant: Beijing CHJ Information Technology Co., Ltd., Beijing 101399 (CN)
(72) Inventor: DONG, Junqi, Beijing 101399 (CN)
(74) Representative: Maiwald GmbH
(86) International application number: PCT/CN2023/109619
(87) International publication number: WO 2024/022451

(57) **Abstract**

A heat pump air-conditioning system and a vehicle are provided. The heat pump air-conditioning system comprises a refrigerant subsystem. The refrigerant subsystem comprises a compressor (1), a reversing valve group (2), a front air-conditioning box body (3), a first throttling component (4) and an out-of-vehicle heat exchanger (5), which are connected to each other by means of a refrigerant pipeline, wherein the front air-conditioning box body (3) is internally provided with a first heat exchanger (31); and the reversing valve group (2) is provided with four connecting ports, the first connecting port being connected to an air outlet of the compressor (1), the second connecting port being connected to the first heat exchanger (31), the third connecting port being connected to the out-of-vehicle heat exchanger (5), and the fourth connecting port being connected to an air return port of the compressor (1).

## Description

### CROSS-REFERENCE TO RELATED APPLICATION

The present disclosure claims priority to Chinese Patent Application No. 202210893741.1, filed on July 27, 2022, the entire content of which is incorporated herein by reference.

### FIELD

The present disclosure relates to the field of thermal management technology, and more particularly to a heat pump air conditioning system and a vehicle.

### BACKGROUND

How to improve energy utilization efficiency to increase a driving range in electric vehicles is one of the most concerned topics at present. Relevant heat pump air conditioning systems of electric vehicles mostly employ a refrigerant circulation pipeline to achieve cooling of a passenger compartment during cooling, and generally adopt a positive temperature coefficient (PTC) electric heating system to achieve heating of the passenger compartment in a low-temperature environment during heating. In order to meet both needs of cooling and heating, the heat pump air conditioning system is very complex with a high cost.

### SUMMARY

In order to solve the above technical problems, embodiments of the present disclosure provide a heat pump air conditioning system and a vehicle.

Embodiments of a first aspect of the present disclosure provide a heat pump air conditioning system, including a refrigerant subsystem.

The refrigerant subsystem includes a compressor, a reversing valve assembly, a front air conditioning unit, a first throttling component, and an external heat exchanger connected through refrigerant pipelines, and the front air conditioning unit includes a first heat exchanger.

The reversing valve assembly includes four connection ports, a first connection port is connected to a discharge port of the compressor, a second connection port is connected to the first heat exchanger, a third connection port is connected to the external heat exchanger, and a fourth connection port is connected to a suction port of the compressor.

In a heating mode, the first connection port is in communication with the second connection port, the third connection port is in communication with the fourth connection port, and the compressor, the first heat exchanger, the first throttling component, and the external heat exchanger are sequentially connected to form a refrigerant circulation circuit.

In a cooling mode, the first connection port is in communication with the third connection port, the second connection port is in communication with the fourth connection port, and the compressor, the external heat exchanger, the first throttling component, and the first heat exchanger are sequentially connected to form another refrigerant circulation circuit.

In some embodiments, the front air conditioning unit further includes a second heat exchanger connected in series with the first heat exchanger, and the first throttling component is connected between the second heat exchanger and the external heat exchanger.

In some embodiments, the front air conditioning unit further includes an electronic full-flow throttle valve connected between the first heat exchanger and the second heat exchanger.

In some embodiments, the refrigerant subsystem further includes a rear air conditioning unit and a second throttling component connected through refrigerant pipelines, the rear air conditioning unit includes a third heat exchanger connected in parallel with the front air conditioning unit, and the second throttling component is connected between the third heat exchanger and the external heat exchanger.

In some embodiments, the refrigerant subsystem further includes a battery heat exchanger and a third throttling component connected through refrigerant pipelines, the battery heat exchanger is connected in parallel with the front air conditioning unit, and the third throttling component is connected between the battery heat exchanger and the external heat exchanger.

In some embodiments, the heat pump air conditioning system further includes a water circuit subsystem, the water circuit subsystem includes a battery water circuit having a first water pump, the battery heat exchanger is connected in the battery water circuit, and the battery heat exchanger transfers heat or cold generated by the refrigerant subsystem to the battery water circuit.

In some embodiments, the water circuit subsystem further includes a warm air circuit, the warm air circuit includes a second water pump, a water-cooled condenser, and a warm air core, the water-cooled condenser is connected in the refrigerant subsystem and located between the external heat exchanger and the reversing valve assembly, the warm air core is located in the front air conditioning unit, and a warm air damper is provided between the warm air core and the first heat exchanger.

In some embodiments, the water circuit subsystem further includes a motor cooling water circuit, the motor cooling water circuit includes a third water pump, an external radiator, and a water-to-water heat exchanger, and the water-to-water heat exchanger is connected in the warm air circuit and transfers heat generated by the warm air circuit to the motor cooling water circuit.

In some embodiments, the water circuit subsystem further includes a waste heat recovery water circuit, the waste heat recovery water circuit is connected in parallel with the motor cooling water circuit through a three-way water valve, and the three-way water valve controls an electric drive assembly to be connected to one of the motor cooling water circuit and the waste heat recovery water circuit.

In some embodiments, the motor cooling water circuit is interconnected with the battery water circuit through a first four-way water valve, and the first four-way water valve controls the one of the motor cooling water circuit and the waste heat recovery water circuit to be independent of or be communicated with the battery water circuit.

In some embodiments, the warm air circuit and/or the battery water circuit includes a heater, the warm air circuit is interconnected with the battery water circuit through a second four-way water valve, and the second four-way water valve controls the warm air circuit and the battery water circuit to be independent of each other or be communicated with each other.

In some embodiments, the refrigerant subsystem further includes an intermediate heat exchanger connected between the external heat exchanger and the suction port of the compressor.

In some embodiments, the reversing valve assembly includes a four-way reversing valve; or
the reversing valve assembly includes four shut-off valves respectively arranged on four pipe segments connected end to end in sequence, and a corresponding connection port is arranged at a joint of each two adjacent pipe segments.

Embodiments of a second aspect of the present disclosure provide a vehicle including the heat pump air conditioning system according to any one of the above embodiments.

The technical solution provided in embodiments of the present disclosure has the following advantages compared with the related art.

The heat pump air conditioning system and the vehicle provided in embodiments of the present disclosure may utilize the reversing valve assembly to switch the flow direction of the refrigerant in the refrigerant subsystem by providing the reversing valve assembly in the refrigerant subsystem, thereby forming a cooling cycle circuit in the cooling mode and a heating cycle circuit in the heating mode. In this way, the refrigerant subsystem not only may be utilized to cool the passenger compartment, but also may be utilized to heat the passenger compartment. The needs of different modes (the heating mode and the cooling mode) are simultaneously met by the refrigerant circulation circuits, the system is simplified and the cost is greatly reduced.

### BRIEF DESCRIPTION OF THE DRAWINGS

The drawings herein are incorporated into the specification and form a part of the specification, show embodiments that comply with the present disclosure, and are used to explain the principles of the present disclosure together with the specification.

In order to more clearly explain the technical solution of embodiments of the present disclosure or the related art, the drawings required to be used in the description of embodiments or the related art will be briefly described below, and it is obvious that for those skilled in the art, other drawings may be obtained according to these drawings without creative labor.
Fig. 1 is a schematic diagram of a heat pump air conditioning system according to an embodiment of the present disclosure.
Fig. 2 is a schematic diagram of a heat pump air conditioning system in a standard heating mode according to an embodiment of the present disclosure.
Fig. 3 is a schematic diagram of a heat pump air conditioning system in a cooling and fast charging mode according to an embodiment of the present disclosure.
Fig. 4 is a schematic diagram of a heat pump air conditioning system in a heating and dehumidification mode according to an embodiment of the present disclosure.
Fig. 5 is a schematic diagram of a heat pump air conditioning system in a mode where a battery and a passenger compartment are simultaneously heated according to an embodiment of the present disclosure.
Fig. 6 is a schematic diagram of a heat pump air conditioning system in a cooling mode according to an embodiment of the present disclosure.
Fig. 7 is a schematic diagram of a heat pump air conditioning system in a waste heat recovery mode according to an embodiment of the present disclosure.
Fig. 8 is a schematic diagram of a reversing valve assembly of a heat pump air conditioning system according to some embodiments of the present disclosure.
Fig. 9 is a schematic diagram of a reversing valve assembly of a heat pump air conditioning system according to some other embodiments of the present disclosure.

References signs:
1 compressor; 2 reversing valve assembly; 3 front air conditioning unit; 31 first heat exchanger; 32 second heat exchanger; 33 electronic fully-flow throttle valve; 34 warm air core; 35 warm air damper; 4 first throttling component; 5 external heat exchanger; 6 gas-liquid separator; 7 intermediate heat exchanger; 8 rear air conditioning unit; 81 third heat exchanger; 9 second throttling component; 10 battery heat exchanger; 11 third throttling component; 12 battery; 13 first water pump; 14 second water pump; 15 water-cooled condenser; 16 electric drive assembly; 17 third water pump; 18 external radiator; 19 water-to-water heat exchanger; 20 heater; 21 three-way water valve; 22 first four-way water valve; 23 second four-way water valve.

### DETAILED DESCRIPTION

In order to more clearly understand the purpose, features and advantages of the present disclosure, embodiments of the present disclosure will be further described below. It should be noted that the embodiments of the present disclosure and the features in the embodiments may be combined with each other without conflict.

In order to fully understand the present disclosure, many specific details are explained in the following description, but the present disclosure may also be implemented in other ways different from those described here; obviously, the embodiments in the description are only a part of embodiments of the present disclosure, not all of them.

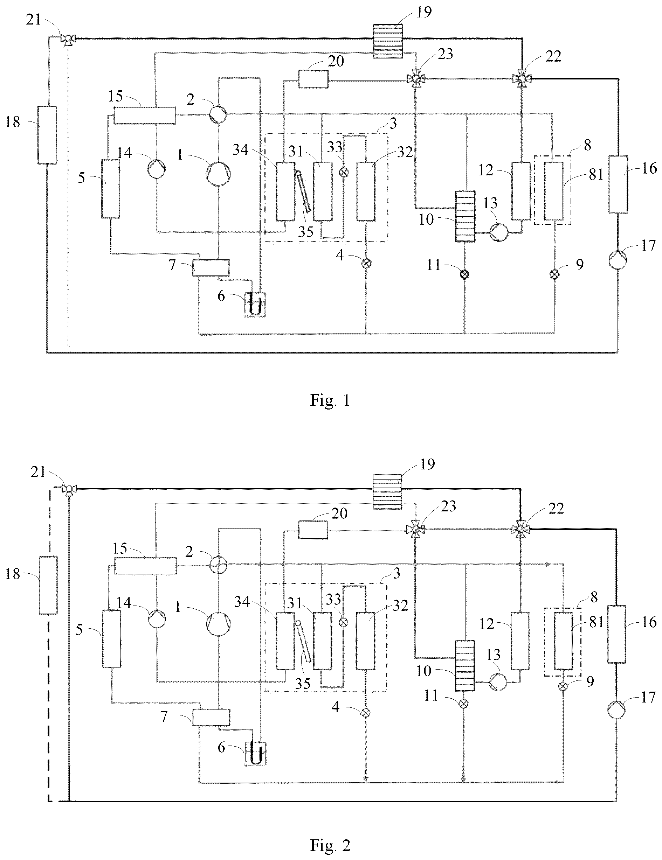

As shown in Figures. 1 to 7, some embodiments of the present disclosure provide a heat pump air conditioning system, including a refrigerant subsystem. In some specific embodiments, the refrigerant subsystem may use carbon dioxide as a refrigerant. The carbon dioxide refrigerant has a strong heating capacity to meet the heating requirements for a passenger compartment under a low-temperature heating condition. Of course, the refrigerant subsystem is not limited to using carbon dioxide as the refrigerant, and R22 refrigerant, R410A refrigerant, etc. may also be used.

In some specific embodiments, as illustrated in Fig. 1, the refrigerant subsystem includes a compressor 1, a reversing valve assembly 2, a front air conditioning unit 3, a first throttling component 4, and an external heat exchanger 5 interconnected by means of refrigerant pipelines. The front air conditioning unit 3 includes a first heat exchanger 31. The reversing valve assembly 2 includes four connection ports, namely a first connection port, a second connection port, a third connection port, and a fourth connection port. The first connection port is connected to a discharge port of the compressor 1, the second connection port is connected to the first heat exchanger 31, the third connection port is connected to the external heat exchanger 5, and the fourth connection port is connected to a suction port of the compressor 1. The first throttling component 4 is located on a refrigerant pipeline where the front air conditioning unit 3 is located, and is connected between the first heat exchanger 31 and the external heat exchanger 5. The first throttling component 4 may specifically be a first electronic expansion valve, or of course, a first capillary tube, etc.

It should be understood that the front air conditioning unit 3 is an air conditioning unit configured to deliver airflow to a front passenger compartment.

The heat pump air conditioning system provided in embodiments of the present disclosure may utilize the reversing valve assembly 2 to switch a flow direction of the refrigerant in the refrigerant subsystem by providing the reversing valve assembly 2 in the refrigerant subsystem. In some specific embodiments, in a heating mode, the first connection port of the reversing valve assembly 2 is in communication with the second connection port of the reversing valve assembly 2, the third connection port of the reversing valve assembly 2 is in communication with the fourth connection port of the reversing valve assembly 2, and the compressor 1, the first heat exchanger 31, the first throttling component 4, and the external heat exchanger 5 are sequentially communicated, thereby forming a refrigerant circulation circuit. In a cooling mode, the first connection port of the reversing valve assembly 2 is in communication with the third connection port of the reversing valve assembly 2, the second connection port of the reversing valve assembly 2 is in communication with the fourth connection port of the reversing valve assembly 2, and the compressor 1, the external heat exchanger 5, the first throttling component 4, and the first heat exchanger 31 are sequentially communicated, thereby forming another refrigerant circulation circuit. Thus, the refrigerant subsystem not only may be utilized to cool the passenger compartment, but also may be utilized to heat the passenger compartment. The needs of both the heating mode and the cooling mode are realized by the refrigerant circuits, thus the system is simplified and costs are greatly reduced.

In some embodiments, as illustrated in Fig. 1, the front air conditioning unit 3 further includes a second heat exchanger 32 connected in series with the first heat exchanger 31. The first throttling component 4 is connected between the second heat exchanger 32 and the external heat exchanger 5. By connecting two heat exchangers in series inside the front air conditioning unit 3, the two heat exchangers simultaneously serve as heating cores under the low-temperature heating condition, effectively increasing a heat exchange area between the heat exchangers and the air flowing through the front air conditioning unit 3, thereby significantly improving the heating energy efficiency of the heat pump air conditioning system in a low-temperature environment, and solving the problem of the low heating efficiency and the serious impact on a driving range of a vehicle caused by an existing heat pump air conditioning system relying on PTC heating in the low-temperature environment.

Specifically, the existing heat pump air conditioning system typically only uses the refrigerant subsystem to directly cool the passenger compartment. However, for heating the passenger compartment, the refrigerant subsystem is usually used to exchange heat with a water circuit subsystem, or a PTC heater provided in a water circuit is directly used to heat the passenger compartment. This heating method results in low heating energy efficiency of the heat pump air conditioning system. The heat pump air conditioning system provided in embodiments of the present disclosure may not only use the refrigerant subsystem to directly cool the passenger compartment, but also achieve using the refrigerant subsystem to directly heat the passenger compartment by providing the reversing valve assembly 2 to switch the flow direction of the refrigerant in the refrigerant subsystem. Furthermore, in the heating mode, the two heat exchangers in the front air conditioning unit 3 simultaneously serve as heating cores, effectively improving the heating energy efficiency. In the cooling mode, the two heat exchangers in the front air conditioning unit 3 simultaneously serve as cooling cores, effectively improving cooling energy efficiency. Thus, the cooling and heating energy efficiency of the heat pump air conditioning system are effectively improved, effectively improving the driving range of the vehicle.

In some specific embodiments, the first throttling component 4 may adopt a two-way electronic expansion valve. The first throttling component 4 is located between a condenser and an evaporator. A high-pressure liquid refrigerant flowing out of the condenser instantly decreases in pressure and transforms into a low-pressure liquid refrigerant after passing through the first throttling component 4, and the low-pressure liquid refrigerant vaporizes into a gaseous refrigerant in the evaporator. By switching the flow direction of the refrigerant in the refrigerant subsystem through the reversing valve assembly 2, the switching between the cooling mode and the heating mode may be achieved.

As shown in Fig. 2, in the heating mode, the compressor 1, the reversing valve assembly 2, the first heat exchanger 31, the second heat exchanger 32, the first throttling component 4, the external heat exchanger 5, and a gas-liquid separator 6 are sequentially connected to form a heating circuit for the passenger compartment. A high-temperature and high-pressure refrigerant gas discharged from the compressor 1 enters the front air conditioning unit 3 after passing through the reversing valve assembly 2, and then sequentially flows through the first heat exchanger 31 and the second heat exchanger 32. At this time, the first heat exchanger 31 and the second heat exchanger 32 simultaneously serve as condensers (or called heating cores), liquefying the high-temperature and high-pressure refrigerant gas into a liquid. During the refrigerant liquefaction process, a large amount of heat is released, which heats the in-vehicle air entering the front air conditioning unit 3, effectively ensuring the heating effect of the heat pump air conditioning system on the air in the passenger compartment. Then, a liquefied refrigerant liquid flows through the first throttling component 4 for pressure reduction, and a pressure of the refrigerant instantly decreases after the refrigerant flows out of the first throttling component 4. A low-pressure refrigerant liquid enters the external heat exchanger 5 (which serves as an evaporator at this time), the refrigerant liquid evaporates and vaporizes into a refrigerant gas by absorbing heat, and simultaneously absorbs the heat from outdoor air. A gaseous refrigerant re-enters the compressor to begin a next cycle.

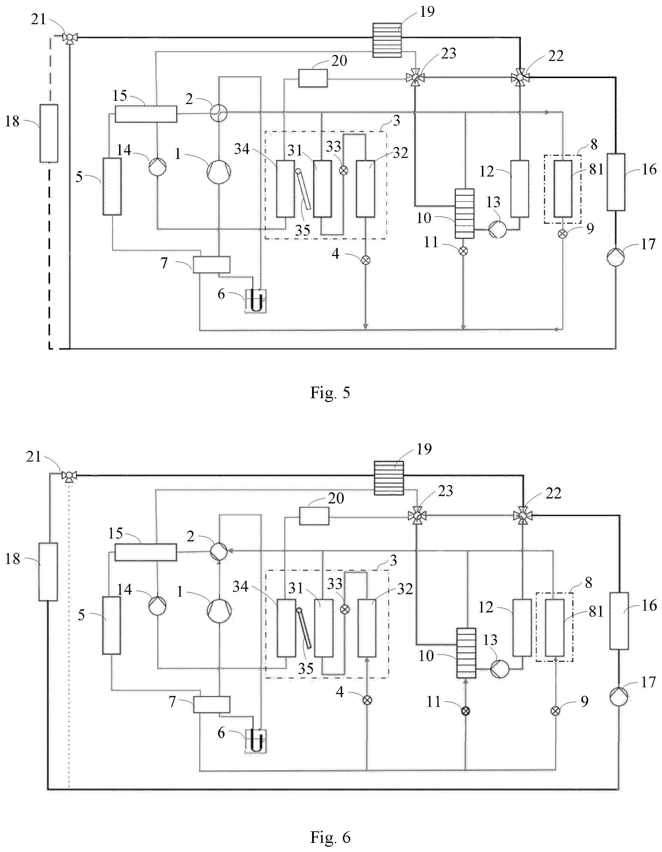

As shown in Fig. 6, in the cooling mode, the flow direction of the refrigerant in the refrigerant subsystem is switched through the reversing valve assembly 2, the compressor 1, the reversing valve assembly 2, the external heat exchanger 5, the first throttling component 4, the second heat exchanger 32, the first heat exchanger 31, and the gas-liquid separator 6 are sequentially connected to form a cooling circuit for the passenger compartment. The high-temperature and high-pressure refrigerant gas discharged from the compressor 1 enters the external heat exchanger 5 (which serves as a condenser at this time) after passing through the reversing valve assembly 2, where the high-temperature and high-pressure refrigerant gas is liquefied into a liquid. During this process, the refrigerant releases a significant amount of heat to the outdoor environment. Then, a liquefied refrigerant flows through the first throttling component 4 for pressure reduction, and a pressure of the refrigerant instantly decreases after the refrigerant flows out of the first throttling component 4. A low-pressure refrigerant liquid enters the front air conditioning unit 3, and sequentially flows through the first heat exchanger 31 and the second heat exchanger 32. At this time, the first heat exchanger 31 and the second heat exchanger 32 simultaneously serve as evaporators (or called cooling cores), where the refrigerant liquid evaporates and vaporizes into a refrigerant gas by absorbing heat, and simultaneously absorbs the heat from the air inside the passenger compartment. This effectively ensures the cooling effect of the heat pump air conditioning system on the air inside the passenger compartment. A gaseous refrigerant then re-enters the compressor to begin a next cycle.

In some embodiments, as shown in Fig. 1, the refrigerant subsystem further includes a rear air conditioning unit 8 and a second throttling component 9 connected through refrigerant pipelines. The rear air conditioning unit 8 includes a third heat exchanger 81 connected in parallel with the front air conditioning unit 3. The second throttling component 9 is located on a refrigerant pipeline where the rear air conditioning unit 8 is located, and is connected between the third heat exchanger 81 and the external heat exchanger 5. The second throttling component 9 may specifically be a second electronic expansion valve, or of course, a second capillary tube, etc.

It should be understood that the rear air conditioning unit 8 is an air conditioning unit configured to deliver airflow to a rear passenger compartment.

In some specific embodiments, the second throttling component 9 may adopt a two-way electronic expansion valve, and the flow direction of the refrigerant in the refrigerant subsystem is switched through the reversing valve assembly 2, so as to achieve the switching between the cooling mode and the heating mode. Therefore, by changing the flow direction of the refrigerant in the refrigerant pipeline where the third heat exchanger 81 in the rear air conditioning unit 8 is located, the refrigerant subsystem not only may be used to achieve cooling of the rear air conditioning unit 8 in the cooling mode (as shown in Fig. 6), but also may be used to achieve heating of the rear air conditioning unit 8 in the heating mode (as shown in Fig. 2). There is no need to arrange an additional heater 20 or introduce a high temperature coolant from a front end for heating the rear air conditioning unit 8, thereby effectively simplifying the pipeline structure of the heat pump air conditioning system.

In some embodiments, as shown in Fig. 1, the refrigerant subsystem further includes a battery heat exchanger 10 and a third throttling component 11 connected through refrigerant pipelines. The battery heat exchanger 10 is connected in parallel with the front air conditioning unit 3, and the third throttling component 11 is located on a refrigerant pipeline where the battery heat exchanger 10 is located, and is connected between the battery heat exchanger 10 and the external heat exchanger 5. The third throttling component 11 may specifically be a third electronic expansion valve, or of course, a third capillary tube, etc.

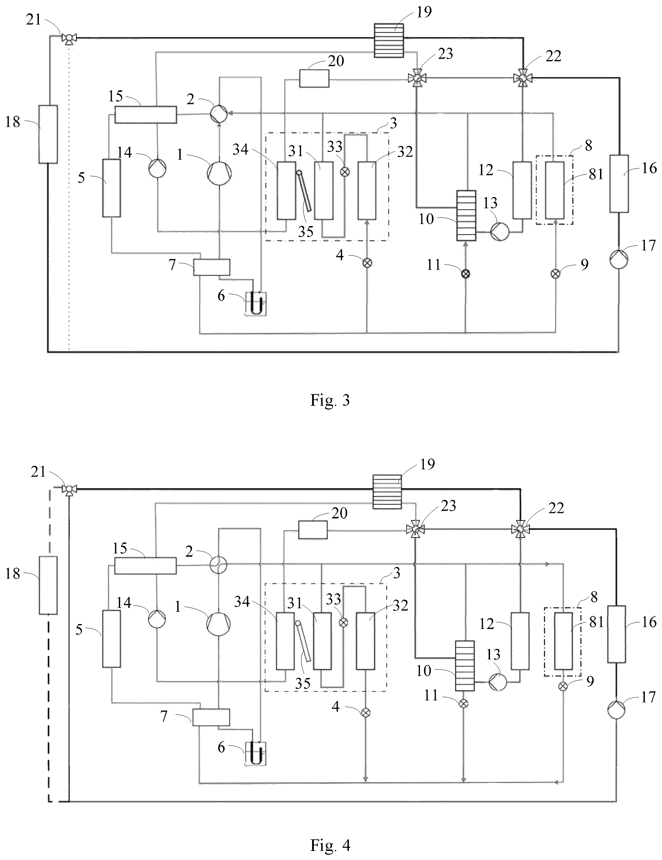

In some specific embodiments, the third throttling component 11 may adopt a two-way electronic expansion valve, and the flow direction of the refrigerant in the refrigerant subsystem is switched through the reversing valve assembly 2, so as to achieve the switching between the cooling mode and the heating mode. Therefore, by changing the flow direction of the refrigerant in the refrigerant pipeline where the battery heat exchanger 10 is located, the refrigerant subsystem not only may be used to achieve cooling of the battery heat exchanger 10 (as shown in Fig. 3 and Fig. 6), but also may be used to achieve heating of the battery heat exchanger 10 (as shown in Fig. 2), thereby meeting the needs of cooling and heating of a battery 12. There is no need to arrange the additional heater 20 or to introduce the high-temperature coolant from the front end for heating the battery 12, thereby effectively simplifying the pipeline structure of the heat pump air conditioning system.

In some embodiments, as shown in Fig. 1, the heat pump air conditioning system further includes a water circuit subsystem, the water circuit subsystem includes a battery water circuit having a first water pump 13, the battery heat exchanger 10 is connected in the battery water circuit, and the battery heat exchanger 10 transfers the heat or cold generated by the refrigerant subsystem to the battery water circuit.

It should be noted that the fluid flowing in the water circuit is not limited to water, but may also be other cooling liquids with good cold or heat storage capabilities. The battery heat exchanger 10 is simultaneously connected to the refrigerant subsystem and the battery water circuit. In other words, the battery heat exchanger 10 includes a set of refrigerant inlet and outlet and a set of coolant inlet and outlet. Specifically, the refrigerant inlet and outlet are configured to be connected to the refrigerant circuit, and the coolant inlet and outlet are configured to be connected to the battery water circuit.

In some specific embodiments, when it is necessary to cool the battery 12, as shown in Figs. 3 and 6, the refrigerant circuit where the battery heat exchanger 10 is located is in the cooling mode, and the battery heat exchanger 10 serves as an evaporator to absorb heat from the battery water circuit, thereby achieving cooling of the battery 12; when it is necessary to heat the battery 12, as shown in Fig. 1, the refrigerant circuit where the battery heat exchanger 10 is located is in the heating mode, and the battery heat exchanger 10 serves as a condenser to release heat into the battery water circuit, thereby achieving heating of the battery 12.

In some embodiments, as shown in Fig. 1, the water circuit subsystem further includes a warm air circuit having a second water pump 14, a water-cooled condenser 15, and a warm air core 34. The water-cooled condenser 15 is connected in the refrigerant subsystem and located between the external heat exchanger 5 and the reversing valve assembly 2. The warm air core 34 is located in the front air conditioning unit 3, and a warm air damper 35 is provided between the warm air core 34 and the first heat exchanger 31.

It should be noted that the water-cooled condenser 15 is simultaneously connected in the warm air circuit and the refrigerant subsystem. In other words, the water-cooled condenser 15 includes a set of refrigerant inlet and outlet and a set of coolant inlet and outlet. Specifically, the refrigerant inlet and outlet are configured to be connected to the refrigerant circuit, and the coolant inlet and outlet are configured to be connected to the warm air circuit.

In the above embodiments, by providing the warm air circuit, the warm air core 34 of the warm air circuit may be utilized to adjust the temperature, humidity, etc., of the air in the front air conditioning unit 3. By arranging the warm air damper 35 between the warm air core 34 and the first heat exchanger 31, the warm air core 34 and the first heat exchanger 31 are separated when the warm air damper 35 is closed, avoiding mutual interference between the warm air core 34 and the first heat exchanger 31. When the warm air damper 35 is opened, the warm air core 34, the first heat exchanger 31, and the second heat exchanger 32 may be utilized to collectively regulate the temperature, humidity, etc., of the air flowing through the front air conditioning unit 3.

In some embodiments, as shown in Fig. 1, the water circuit subsystem further includes a motor cooling water circuit having a third water pump 17, an external radiator 18, and a water-to-water heat exchanger 19. The water-to-water heat exchanger 19 is connected in the warm air circuit and transfers the heat generated by the warm air circuit to the motor cooling water circuit.

It should be noted that the water-to-water heat exchanger 19 is connected in both the motor cooling water circuit and the warm air circuit. In other words, the water-to-water heat exchanger 19 includes two sets of coolant inlets and outlets. Specifically, one set of coolant inlet and outlet are configured to be connected to the warm air circuit, and the other set of coolant inlet and outlet are configured to be connected to the motor cooling water circuit.

In the above embodiments, by providing the water-to-water heat exchanger 19 in the warm air circuit and the motor cooling water circuit, in a cooling and fast charging mode, as shown in Fig. 3, the battery water circuit provides heat dissipation for the battery through water circulation. At this time, the battery heat exchanger 10 serves as an evaporator, transferring the heat in the battery water circuit to the refrigerant subsystem. The water-cooled condenser 15 transfers the heat generated by the refrigerant subsystem to the warm air circuit, then a part of the heat generated by the water-cooled condenser 15 during a cooling process is transferred to the motor cooling water circuit through the water-to-water heat exchanger 19 (at this time, a motor is inactive and has no cooling demand), and then the idle motor cooling water circuit is utilized to discharge the part of the heat generated by the water-cooled condenser 15 to the air outside the vehicle, thereby facilitating the improvement of the condensation capacity of the water-cooled condenser 15, meeting the high cooling demand in the fast charging mode, and achieving the goal of rapidly dissipating heat from the battery.

In some embodiments, as shown in Fig. 1, the water circuit subsystem further includes a waste heat recovery water circuit. The waste heat recovery water circuit is connected in parallel with the motor cooling water circuit through a three-way water valve 21. The three-way water valve 21 controls an electric drive assembly 16 to be connected to one of the motor cooling water circuit and the waste heat recovery water circuit.

In the above embodiments, by providing the waste heat recovery water circuit, the heat generated by the electric drive assembly 16 may be recovered and utilized. For example, in the heating mode, the heat produced by the electric drive assembly 16 may be utilized to heat the water-cooled condenser 15 (which serves as an evaporator at this time), thereby enhancing the heating capacity of the water-cooled condenser 15.

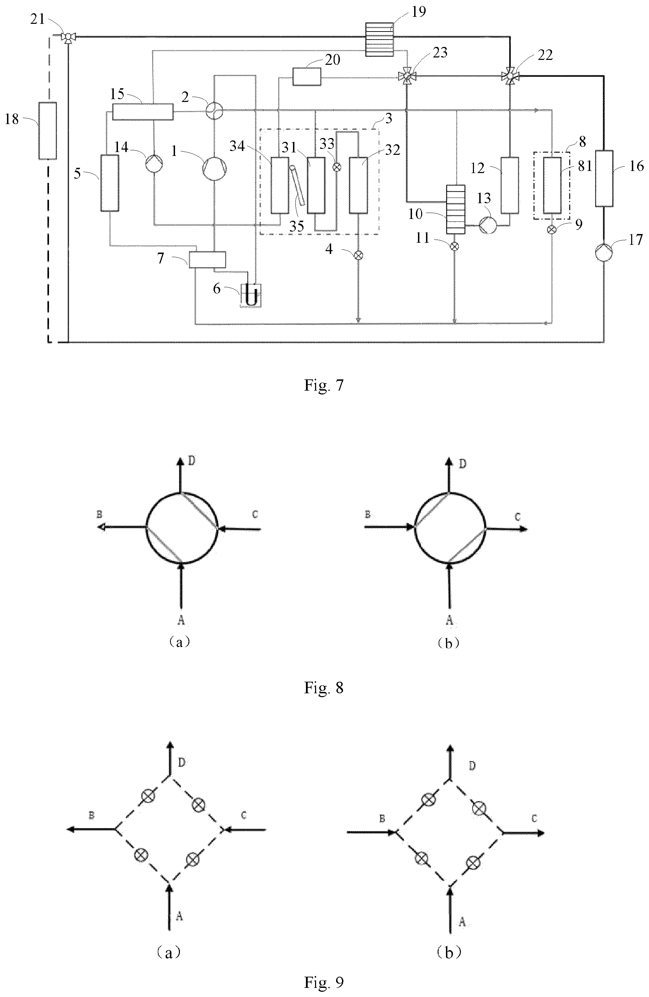

Specifically, in the cooling mode (as shown in Fig. 6) as well as the cooling and fast charging mode (as shown in Fig. 3), the three-way water valve 21 may control the electric drive assembly 16 to be connected to the motor cooling water circuit. In a waste heat recovery mode (as shown in Fig. 7), the three-way water valve 21 may control the electric drive assembly 16 to be connected to the waste heat recovery water circuit. In specific implementation, the motor cooling water circuit and the waste heat recovery water circuit may share a section of water pipeline. The electric drive assembly 16 (which may specifically include a motor, an inverter, etc.), the third water pump 17, and the water-to-water heat exchanger 19 are arranged on the shared section of water pipeline. The external radiator 18 is arranged on a section of water pipeline not shared by the motor cooling water circuit and the waste heat recovery water circuit, and no additional components are provided on the section of water pipeline not shared by the motor cooling water circuit and the waste heat recovery water circuit. As such, by switching valve ports of the three-way water valve 21, the electric drive assembly 16 is controlled to be connected to one of the motor cooling water circuit and the waste heat recovery water circuit.

In some embodiments, as shown in Fig. 1, the motor cooling water circuit is interconnected with the battery water circuit through a first four-way water valve 22. The first four-way water valve 22 controls one of the motor cooling water circuit and the waste heat recovery water circuit to operate independently of or be communicated with a battery cooling water circuit. For example, in the cooling mode as well as in the cooling and fast charging mode, the motor cooling water circuit and the battery cooling water circuit may be controlled to be independent of each other through the first four-way water valve 22. In the heating mode, the waste heat recovery water circuit and the battery cooling water circuit may be controlled to be independent of each other through the first four-way water valve 22. In the waste heat recovery mode, the waste heat recovery water circuit and the battery cooling water circuit may be controlled to be communicated with each other through the first four-way water valve 22.

In some embodiments, as shown in Fig. 1, the warm air circuit includes a heater 20, the warm air circuit is interconnected with the battery water circuit through a second four-way water valve 23, and the second four-way water valve 23 controls the warm air circuit and the battery water circuit to be independent of each other or be communicated with each other. For example, when the heating capacity of the battery is insufficient, the warm air circuit and the battery water circuit may be communicated with each other, and the heater 20 arranged in the warm air circuit may be utilized to heat the battery. Of course, an arrangement of the heater 20 is not limited to being arranged in the warm air circuit, but may also be arranged in the battery water circuit, or the heater 20 may be arranged in each of the warm air circuit and the battery water circuit as needed. In all the above cases, the purpose of using the heater 20 to provide auxiliary heating for the battery may be achieved.

In some embodiments, as shown in Fig. 1, the front air conditioning unit 3 further includes an electronic full-flow throttle valve 33 connected between the first heat exchanger 31 and the second heat exchanger 32.

Specifically, when heating and dehumidification are required inside the front air conditioning unit 3, as shown in Fig. 4, the electronic full-flow throttle valve 33 between the first heat exchanger 31 and the second heat exchanger 32 in the front air conditioning unit is in a throttling state, the second heat exchanger 32 is in a cooling and dehumidification mode, the first heat exchanger 31 is in the heating mode, and at the same time, the external heat exchanger 5 serves as an evaporator, thus meeting the needs of heating and dehumidification. In a specific implementation, the opening degree of the first throttling component 4 between the second heat exchanger 32 and the external heat exchanger 5 may be determined based on the actual air state. If the ambient temperature is very low, the opening degree of the first throttling component 4 is adjusted to be small, ensuring that heat may be absorbed from the external heat exchanger 5, and the temperature of the refrigerant in the second heat exchanger 32 is not lower than zero degrees, preventing the surface of fins of the second heat exchanger 32 from freezing and hindering air circulation.

In some embodiments, as shown in Fig. 1, the refrigerant subsystem further includes an intermediate heat exchanger 7 connected between the external heat exchanger 5 and the suction port of the compressor 1, i.e. located on a side away from the reversing valve assembly 2. The intermediate heat exchanger 7 is connected to a refrigerant pipeline on a suction port side of the compressor 1, to provide the cooling and heating capabilities of the refrigerant subsystem by arranging the intermediate heat exchanger 7.

The heat pump air conditioning system provided in the above embodiments of the present disclosure may achieve a plurality of different working modes. The working modes of the heat pump air conditioning system may include the standard heating mode, the cooling mode, the cooling and fast charging mode, the heating and dehumidification mode, a mode where the battery and the passenger compartment are simultaneously heated, and the waste heat recovery mode, etc.

In the standard heating mode, as shown in Fig. 2, the passenger compartment is heated. The two heat exchangers in the front air conditioning unit 3 heat the air flowing through the front air conditioning unit 3, achieving the heating demand for the passenger compartment, improving the heating rate and energy efficiency, and simplifying control. Moreover, the refrigerant subsystem may also be utilized to heat the rear air conditioning unit 8, without the need for additional PTC (APTC) heating or specially introducing the high-temperature coolant from the front end to heat the rear air conditioning unit 8.

In the cooling and fast charging mode of the battery, as shown in Fig. 3, the refrigerant subsystem is used to cool the battery water circuit where the battery is located. At the same time, the external radiator 18 and the water-to-water heat exchanger 19 form the motor cooling circuit, which works together with the water-cooled condenser 15 in the warm air circuit, to achieve cooling of the high-temperature and high-pressure refrigerant, effectively improving the cooling capacity of the water-cooled condenser 15, and enhancing the cooling capacity of the battery. At this time, the warm air damper 35 inside the front air conditioning unit 3 is in a closed state, ensuring that the air in the front air conditioning unit 3 does not pass through the warm air core 34.

In the heating and dehumidification mode, as shown in Fig. 4, the electronic full-flow throttle valve 33 between the first heat exchanger 31 and the second heat exchanger 32 in the front air conditioning unit is in the throttling state, the second heat exchanger 32 is in a cooling and dehumidification mode, the first heat exchanger 31 is in the heating mode, and at the same time, the external heat exchanger 5 serves as an evaporator, thus meeting the needs of heating and dehumidification. In a specific implementation, the opening degree of the first throttling component 4 between the second heat exchanger 32 and the external heat exchanger 5 may be determined based on the actual air state. If the ambient temperature is very low, the opening degree of the first throttling component 4 is adjusted to be small, ensuring that heat may be absorbed from the external heat exchanger 5, and the temperature of the refrigerant in the second heat exchanger 32 is not lower than zero degrees, preventing the surface of fins of the second heat exchanger 32 from freezing and hindering air circulation.

In the mode where the battery and the passenger compartment are simultaneously heated, as shown in Fig. 5, the high-temperature and high-pressure refrigerant from the compressor 1 directly enters the two heat exchangers in the front air conditioning unit 3, the heat exchanger in the rear air conditioning unit 8, and the battery heat exchanger 10 after passing through the reversing valve assembly 2. At this time, the two heat exchangers in the front air conditioning unit 3 serves as condensers to heat the air in the front air conditioning unit 3, the heat exchanger in the rear air conditioning unit 8 serves as a condenser to heat the air in the rear air conditioning unit 8, and the battery heat exchanger 10 serves as a condenser to heat the water for the battery. If the heating capacity of the battery is insufficient, the heater 20 in the warm air circuit may be activated. The warm air circuit is connected in series with the battery water circuit through the four-way water valve. Alternatively, the heater 20 of the warm air circuit is utilized to heat the warm air core 34 in the front air conditioning unit 3, and the water-cooled condenser 15 (which serves as an evaporator at this time) is utilized to heat the refrigerant, improving the heat absorption capacity on a low-pressure side of the heat pump and ultimately achieving rapid heating of the battery. At this time, the heater 20 and the compressor 1 work together, and the heat is absorbed from the air, so that three parts of heat heats the coolant in the battery water circuit to meet the heating requirements for the battery.

It should be noted that the PTC heater 20 may be arranged in the warm air circuit, or in the battery water circuit. In addition, by utilizing motor stall to generate heat, the power of the heater 20 may be minimized or eliminated.

In the cooling mode, as shown in Fig. 6, the two heat exchangers in the front air conditioning unit work as evaporators simultaneously. At this time, the electronic full-flow throttle valve 33 between the two heat exchangers is in a full-flow mode, and the front air conditioning unit 3, the rear air conditioning unit 8, and the battery are in a parallel mode. Similarly, the water-to-water heat exchanger 19 in the motor cooling water circuit is used to cool the liquid in the water-cooled condenser 15 in the warm air circuit, thereby improving the cooling capacity of the refrigerant on a high-pressure side.

In addition, in another scenario, such as an environmental condition of 15-20 °C, the cooling and dehumidification mode is required in the passenger compartment. The two heat exchangers in the front air conditioning unit 3 are used as evaporators to achieve cooling simultaneously, while the water-cooled condenser 15 generates heat to heat the warm air core 34, thereby achieving the purpose of cooling and dehumidification. In some embodiments, a dual temperature zone control of the front air conditioning unit 3 may be achieved by using the warm air damper 35 between the warm air core 34 and the first heat exchanger 31.

In the waste heat recovery mode, as shown in Fig. 7, the battery water circuit and the waste heat recovery water circuit are communicated with each other through the first four-way water valve 22, to use the heat generated by the motor and the battery in a working process to heat the water-cooled condenser 15 (which serves as an evaporator at this time), thereby improving the heating capacity of the water-cooled condenser 15 and achieving energy recovery and utilization.

It should be noted that the reversing valve assembly 2 may specifically adopt a four-way reversing valve, or a valve assembly composed of four shut-off valves. In other words, in the schematic diagrams of the above system, it is described that the four-way reversing valve is adopted to switch the refrigerant on the high-pressure and low-pressure sides of the refrigerant subsystem, achieving the purpose of cooling and heating. The four-way reversing valve is not the only means, and it may be replaced by the four shut-off valves, which may also achieve the purpose of cooling and heating.

In some embodiments, as shown in Fig. 8, the reversing valve assembly 2 includes the four-way reversing valve.

In other embodiments, as shown in Fig. 9, the reversing valve assembly 2 includes the four shut-off valves respectively arranged on four pipe segments connected end to end in sequence. The cooling mode and the heating mode are switched by opening two of the four shut-off valves and closing the other two of the four shut-off valves.

In summary, the heat pump air conditioning system provided in the embodiments of the present disclosure has at least the following technical effects.
1) Taking advantage of the strong heating capacity of carbon dioxide, the carbon dioxide refrigerant is used to simultaneously heat the battery and air conditioning units. By combining the heat exchangers and valves, the optimal combination for switching between a plurality of modes is achieved, improving cooling and heating efficiency.
2) The heat pump air conditioning system adopts a direct heat pump system, which directly heats and cools the air, and directly exchanges heat with the ambient air to improve the energy efficiency and capacity of the system.
3) By utilizing the two heat exchangers in the front air conditioning unit to simultaneously serve as cooling cores or heating cores, the area of the heat exchangers is better increased, thereby enhancing the cooling and heating capabilities and improving the energy efficiency of the system.
4) By adjusting the power of the warm air circuit and the heater, as well as combining the water-cooled condenser and the water-to-water heat exchanger, and fully utilizing the external radiator in the motor cooling water circuit, various combinations of cooling and heating functions are achieved, especially the cooling and fast charging mode of the battery.
5) Utilizing the carbon dioxide refrigerant to directly heat the battery heat exchanger, the heating of the battery is achieved. The heating of a rear air conditioner is achieved through the third heat exchanger in the rear air conditioner and the second electronic expansion valve with two-way full flow, thus reducing the cost.
6) By using the four-way reversing valve to switch the cooling mode and the heating mode, the complexity of a refrigerant side of the system may be greatly reduced, and the risk of sealing leakage may be reduced.

Other embodiments of the present disclosure provide a vehicle including the heat pump air conditioning system according to any one of the above embodiments.

The vehicle provided in the embodiments of the present disclosure has the beneficial effects of the heat pump air conditioning system in any one of the above embodiments as it includes the heat pump air conditioning system in any one of the above embodiments, which will not be repeated here.

It should be noted that in the present disclosure, relative terms such as "first" and "second" are only used to distinguish one entity or operation from another entity or operation, and do not necessarily require or imply any such actual relationship or order between these entities or operations. Furthermore, the term "include", "comprise" or any other variation thereof is intended to cover non-exclusive inclusions such that a process, method, article, or device comprising/including a series of elements includes not only those elements, but also other elements that are not expressly listed, or also includes elements inherent in such process, method, article, or device. Without further limitation, an element defined by the phrase "comprising/including a ..." does not exclude the presence of additional identical elements in the process, method, article or device comprising/including the element.

The above description only relates to specific embodiments of the present disclosure, so that those skilled in the art may understand or implement the present disclosure. Various modifications to these embodiments will be apparent to those skilled in the art, and the general principles defined herein may be implemented in other embodiments without departing from the spirit or scope of the present disclosure. Therefore, the present disclosure will not be limited to the embodiments described herein, but is to be accorded the widest scope consistent with the principles and novel features disclosed herein.

## Claims

1. A heat pump air conditioning system, comprising a refrigerant subsystem;
the refrigerant subsystem comprising a compressor, a reversing valve assembly, a front air conditioning unit, a first throttling component, and an external heat exchanger connected through refrigerant pipelines, the front air conditioning unit comprising a first heat exchanger;
the reversing valve assembly comprising four connection ports, wherein a first connection port is connected to a discharge port of the compressor, a second connection port is connected to the first heat exchanger, a third connection port is connected to the external heat exchanger, and a fourth connection port is connected to a suction port of the compressor;
wherein, in a heating mode, the first connection port is in communication with the second connection port, the third connection port is in communication with the fourth connection port, and the compressor, the first heat exchanger, the first throttling component, and the external heat exchanger are sequentially connected to form a refrigerant circulation circuit; and
in a cooling mode, the first connection port is in communication with the third connection port, the second connection port is in communication with the fourth connection port, and the compressor, the external heat exchanger, the first throttling component, and the first heat exchanger are sequentially connected to form another refrigerant circulation circuit.

2. The heat pump air conditioning system according to claim 1, wherein the front air conditioning unit further comprises a second heat exchanger connected in series with the first heat exchanger, and the first throttling component is connected between the second heat exchanger and the external heat exchanger.

3. The heat pump air conditioning system according to claim 2, wherein the front air conditioning unit further comprises an electronic full-flow throttle valve connected between the first heat exchanger and the second heat exchanger.

4. The heat pump air conditioning system according to any one of claims 1 to 3, wherein the refrigerant subsystem further comprises a rear air conditioning unit and a second throttling component connected through refrigerant pipelines, the rear air conditioning unit comprises a third heat exchanger connected in parallel with the front air conditioning unit, and the second throttling component is connected between the third heat exchanger and the external heat exchanger.

5. The heat pump air conditioning system according to any one of claims 1 to 4, wherein the refrigerant subsystem further comprises a battery heat exchanger and a third throttling component connected through refrigerant pipelines, the battery heat exchanger is connected in parallel with the front air conditioning unit, and the third throttling component is connected between the battery heat exchanger and the external heat exchanger.

6. The heat pump air conditioning system according to claim 5, further comprising a water circuit subsystem, wherein the water circuit subsystem comprises a battery water circuit having a first water pump, the battery heat exchanger is connected in the battery water circuit, and the battery heat exchanger transfers heat or cold generated by the refrigerant subsystem to the battery water circuit.

7. The heat pump air conditioning system according to claim 6, wherein the water circuit subsystem further comprises a warm air circuit, the warm air circuit comprises a second water pump, a water-cooled condenser, and a warm air core, the water-cooled condenser is connected in the refrigerant subsystem and located between the external heat exchanger and the reversing valve assembly, the warm air core is located in the front air conditioning unit, and a warm air damper is provided between the warm air core and the first heat exchanger.

8. The heat pump air conditioning system according to claim 7, wherein the water circuit subsystem further comprises a motor cooling water circuit, the motor cooling water circuit comprises a third water pump, an external radiator, and a water-to-water heat exchanger, and the water-to-water heat exchanger is connected in the warm air circuit and transfers heat generated by the warm air circuit to the motor cooling water circuit.

9. The heat pump air conditioning system according to claim 8, wherein the water circuit subsystem further comprises a waste heat recovery water circuit, the waste heat recovery water circuit is connected in parallel with the motor cooling water circuit through a three-way water valve, and the three-way water valve controls an electric drive assembly to be connected to one of the motor cooling water circuit and the waste heat recovery water circuit.

10. The heat pump air conditioning system according to claim 9, wherein the motor cooling water circuit is interconnected with the battery water circuit through a first four-way water valve, and the first four-way water valve controls the one of the motor cooling water circuit and the waste heat recovery water circuit to be independent of or be communicated with the battery water circuit.

11. The heat pump air conditioning system according to any one of claims 7 to 10, wherein the warm air circuit and/or the battery water circuit comprises a heater, the warm air circuit is interconnected with the battery water circuit through a second four-way water valve, and the second four-way water valve controls the warm air circuit and the battery water circuit to be independent of each other or be communicated with each other.

12. The heat pump air conditioning system according to any one of claims 1 to 11, wherein the refrigerant subsystem further comprises an intermediate heat exchanger connected between the external heat exchanger and the suction port of the compressor.

13. The heat pump air conditioning system according to any one of claims 1 to 12, wherein the reversing valve assembly comprises a four-way reversing valve; or
the reversing valve assembly comprises four shut-off valves respectively arranged on four pipe segments connected end to end in sequence, and a corresponding connection port is arranged at a joint of each two adjacent pipe segments.

14. A vehicle, comprising a heat pump air conditioning system according to any one of claims 1-13.
